# EUROPÄISCHE PATENTSCHRIFT

(11) **EP 2 931 926 B1**
(45) Veröffentlichungstag und Bekanntmachung des Hinweises auf die Patenterteilung: **21.11.2018**
(21) Anmeldenummer: 13801516.9
(22) Anmeldetag: 29.11.2013
(51) Int. Cl.: C22B 7/00, C22B 7/02

(54) **VERFAHREN ZUR RÜCKGEWINNUNG VON WERTSTOFFEN AUS SCHLACKE**
METHOD FOR RECOVERING MATERIALS FROM SLAG
PROCÉDÉ DE RÉCUPÉRATION DE SUBSTANCES DE VALEUR À PARTIR DE SCORIES

(30) Priorität: 11.12.2012 EP 12196494
(43) Veröffentlichungstag der Anmeldung: 21.10.2015
(73) Patentinhaber: LAB Geodur GmbH, 70469 Stuttgart (DE)
(72) Erfinder: WEIPPERT, Roland Gerhard, CH-8123 Ebmatingen (CH); SCHMIDT, Martin, CH-6318 Walchwil (CH)
(74) Vertreter: Lavoix
(86) Internationale Anmeldenummer: PCT/EP2013/075106
(87) Internationale Veröffentlichungsnummer: WO 2014/090601

(56) Entgegenhaltungen:
- EP-A1- 0 372 039
- EP-A1- 1 348 905
- DE-A1- 19 508 293
- DE-A1- 19 747 504
- DE-C1- 4 123 277
- JP-A- 2009 202 089
- JP-A- 2012 006 771
- US-A1- 2009 038 440

## Beschreibung

### TECHNISCHES GEBIET

Die vorliegende Erfindung betrifft ein Verfahren zur Rückgewinnung von Wertstoffen aus Schlacke nach dem Oberbegriff von Anspruch 1.

### STAND DER TECHNIK

In vielen Teilen der Welt, insbesondere in Europa, wird Abfall mittels einer Müllverbrennungsanlage entsorgt. Schlackenartige Rückstände verbleiben dabei auf einem Rost im Feuerraum der Müllverbrennungsanlage und werden periodisch oder kontinuierlich in einen Entschlacker bewegt. Beim Entschlacker handelt es sich meist um ein Becken, welches mit einer Prozessflüssigkeit befüllt ist. Durch die Prozessflüssigkeit, welche meist Wasser ist, wird die heisse vom Rost kommende Asche gekühlt und wird, z.B. mit einem Stössel, ausgestossen.

Soll die Schlacke zwecks Metallrückgewinnung aufbereitet werden, wird sie nach dem Ausstossen zwischengelagert, wobei sie durch Verdampfung von Wasser, die Korrosion von Metallen und die Neubildung von wasserhaltigen Mineralien entwässert wird bzw. austrocknet. Nach einer gewissen Trocknungszeit von einigen Wochen oder Monaten, typischerweise nach 3 Monaten, wird die Schlacke weiterverarbeitet. Aufgrund der Mineralneubildungen in der Schlacke haben sich dann aus den einzelnen Aschepartikeln grössere Schlackenbrocken gebildet, welche mehrere Zentimeter bis Dezimeter gross sind.

Die Schlacken/Schlackenbrocken werden mit dem Ziel der Rückgewinnung von Metallen zunächst mechanisch gebrochen und anschliessend werden die Metalle aus den gebrochenen Schlackenbrocken herausgewonnen. Dies geschieht in der Regel mittels trockenmechanischen Verfahren, gelegentlich aber auch durch nassmechanische Aufbereitung. Diese Verfahren haben den Nachteil, dass das Brechen der Schlackenbrocken technisch aufwendig und damit teuer ist (Energieaufwand, Verschleiss, etc.). Trotzdem ist die Ausbeute an kleinen Metallstücken bescheiden, weil diese durch die Schlacke eingekapselt wurden und auch durch die der konventionellen Aufbereitung vorgeschaltete Zerkleinerung nicht freigelegt werden. Kleine Metallpartikel sind daher nur sehr ungenügend aus der gebrochenen Schlacke abscheidbar.

Das Dokument EP 1 348 905 A1 offenbart ein Verfahren zur Behandlung von Verbrennungsrückständen einer Verbrennungsanlage gemäss dem Oberbegriff von Anspruch 1. Das Dokument DE 195 08 293 A1 offenbart ein Verfahren zum Aufbereiten von Schlacke aus Müllverbrennungsanlagen.

### DARSTELLUNG DER ERFINDUNG

Der vorliegenden Erfindung liegt die Aufgabe zugrunde, ein Verfahren anzugeben, welches die Nachteile des Standes der Technik überwindet. Insbesondere soll ein Verfahren zur Rückgewinnung von Metallen angegeben werden, welches effizienter ist. Eine weitere Aufgabe der Erfindung ist es, ein Verfahren anzugeben, dessen Ausbeute an Metallen höher ist, als bei den aus dem Stand der Technik bekannten Verfahren.

Diese Aufgabe löst das Verfahren nach Anspruch 1. Demgemäss wird ein Verfahren zur Rückgewinnung von Metallen, insbesondere Schwermetallen und/oder Edelmetallen, aus festen Verbrennungsrückständen einer Müllverbrennungsanlage angegeben. Beispielsweise definieren sich Schwermetalle in technischer Hinsicht als Edelmetalle, wie z.B. Gold, Silber und Platin, sowie schwere Nichteisenmetallen, wie z.B. Kupfer, Messing, Blei und Zink. Das Verfahren umfasst den Schritt des Austragens der Verbrennungsrückstände aus dem Verbrennungsteil der Müllverbrennungsanlage. Weiter umfasst das Verfahren die nassmechanische Aufbereitung der Verbrennungsrückstände mit einem Schritt des Abscheidens der Metalle aus den Verbrennungsrückständen, wobei die nassmechanische Aufbereitung zeitnah an den Schritt des Austragens erfolgt. Folglich werden die metallischen Bestandteile zeitnah nach dem Austrag aus der Müllverbrennungsanlage mit dem Schritt des Abscheidens abgeschieden.

Durch die nassmechanische Aufbereitung der Verbrennungsrückstände zeitnah an den Schritt des Austragens wird ein Verbinden der Verbrennungsrückstände und somit ein Einschliessen der metallische Bestandteile vermieden. Insofern kann dadurch eine grössere Ausbeute der metallischen Bestandteile erreicht werden. Zudem ist das Verfahren effizienter, da ein mechanisches Brechen der Verbrennungsrückstände entfällt.

Vor dem Schritt des Abscheidens werden die Verbrennungsrückstände mit einer Flüssigkeit, insbesondere Wasser, zu einer Suspension vermischt. Anschliessend erfolgt mit mindestens oder genau einer Klassiervorrichtung eine grössenabhängige Sortierung der in der Suspension vorhandenen Verbrennungsrückstände, wobei eine Suspension mit Verbrennungsrückständen von geeigneter Korngrösse, insbesondere von kleiner als 2 mm, gewonnen wird. Die Klassiervorrichtung wird vorzugsweise mit Wasser unterstützt. Es kann also von einer Nassklassierung gesprochen werden. Die Suspension wird dann mit dem Schritt des Abscheidens weiterverarbeitet. Der Schritt des Abscheidens umfasst die Abscheidung der Metalle mittels Dichtesortierung.

Vorzugsweise wird die nassmechanische Aufbereitung maximal 48 Stunden, besonders vorzugsweise maximal 12 Stunden, nach dem Schritt des Austragens durchgeführt. Versuche haben gezeigt, dass innerhalb dieser Zeiträume noch keine relevante Verbindung der Verbrennungsrückstände untereinander stattgefunden hat. Folglich werden die metallischen Teile nicht eingekapselt. Kürzere Zeitdauern sind dabei besonders vorteilhaft. Vorzugsweise umfasst die nassmechanische Aufbereitung den Schritt der Zuführung der festen Verbrennungsrückstände in ein mit einer Flüssigkeit befülltes Becken, insbesondere einen Entschlacker. Die Flüssigkeit ist vorzugsweise Wasser oder eine wässrige Lösung. Das Becken ist dabei bevorzugt im Bereich des Rostes der Müllverbrennungsanlage angeordnet. Die Verbrennungsrückstände werden mit der Flüssigkeit zu einer Suspension vermischt. Von dieser Suspension werden die Metalle, insbesondere die Schwer- und Edelmetalle, von den Verbrennungsrückständen abgeschieden.

Vorzugsweise wird das Verfahren on site also vor Ort in der Müllverbrennungsanlage durchgeführt. Besonders bevorzugt werden die Verbrennungsrückstände direkt vom Rost ggf. über einen Abwurfschacht gewonnen. Die Suspension mit den Verbrennungsrückständen wird in diesem Fall direkt aus dem Entschlacker der Müllverbrennungsanlage gewonnen.

In einer Weiterbildung werden die Suspension bzw. die Verbrennungsrückstände in Prozessrichtung gesehen unmittelbar nach der Müllverbrennungsanlage gewonnen.

Vorzugsweise erfolgt der Schritt des Abscheidens der Metalle aus den Verbrennungsrückständen bzw. der Suspension mittels Dichtesortierung, insbesondere mit einem Wendelscheider, und/oder anderer gravimetrischer Separationssysteme.

Vorzugsweise werden vor dem Schritt des Abscheidens die Verbrennungsrückstände ggf. in der Suspension, einer Klassiervorrichtung zugeführt und in einem Schritt der Klassierung in mindestens zwei Teilmengen klassiert. Mit der Klassierung kann die Effizienz des Verfahrens weiter gesteigert werden, weil für den Abscheidvorgang unerwünschte Grössen aus den Verbrennungsrückständen entfernt werden.

Vorzugsweise werden beim Schritt der Klassierung die festen Verbrennungsrückstände in eine erste Teilmenge mit Grobgut und eine zweite Teilmenge mit Feingut klassiert. Wenn die Verbrennungsrückstände Teil der Suspension sind, werden also eine Grobgutsuspension, sowie eine Feingutsuspension bereitgestellt.

Besonders bevorzugt werden die Verbrennungsrückstände in eine dritte Teilmenge mit Feinstgut unterteilt, wobei die dritte Teilmenge vorzugsweise von der zweiten Teilmenge klassiert wird. Wenn die Verbrennungsrückstände Teil der Suspension sind, wird also zusätzlich zur Grobgutsuspension und zur Feingutsuspension noch eine Feinstgutsuspension mit Feinstgut und der Flüssigkeit bereitgestellt, welche auch als Schlamm bezeichnet werden kann..

Besonders bevorzugt umfasst das Verfahren weiterhin den Schritt des Zuführens von mindestens einer Teilmenge, vorzugsweise des Feingutes, zur Scheidevorrichtung und des Rückführens von mindestens einer anderen Teilmenge, vorzugsweise des Grobgutes und/oder des Feinstgutes. Die Rückführung der Feinstgutsuspension erfolgt besonders bevorzugt in den Entschlacker. Die Rückführung des Grobgutes erfolgt besonders bevorzugt in den Austrag des Entschlackers oder in die nachgeschalteten Förderanlagen.

In einer besonders bevorzugten Ausführungsform erfolgt die Klassierung von Feingut und Grobgut in einer ersten Klassiervorrichtung und die weitere Klassierung in Feinstgut in einer zweiten von der ersten Klassiervorrichtung unterschiedlichen Klassiervorrichtung, wobei die erste Klassiervorrichtung bevorzugt ein Sieb oder ein Bogensieb, und die zweite Klassiervorrichtung ein Zyklon oder ein mechanischer Klassierer ist.

Vorzugsweise umfasst die Feingutfraktion mit dem Feingut Verbrennungsrückstände mit einer Korngrösse kleiner als 4 mm, insbesondere von kleiner als 2 mm. Die Grobgutfraktion mit dem Grobgut umfasst Verbrennungsrückstände mit einer Korngrösse von grösser als 4 mm, insbesondere von grösser als 2 mm. Die Feinstgutfraktion mit dem Feinstgut umfasst Verbrennungsrückstände mit einer Korngrösse von kleiner als 0.05 mm, insbesondere von kleiner als 0.03 mm.

Werden also die drei Teilmengen gebildet, so liegt die Korngrösse der zwecks Metallextraktion aufzubereitenden Feingutfraktion zwischen 0.03 mm und 4 mm, insbesondere zwischen 0.05 mm und 2 mm.

Versuche haben gezeigt, dass es besonders vorteilhaft ist, die Feingutfraktion mit den entsprechenden Korngrössen der Abscheidung zuzuführen, weil hier der Gehalt an Metallen, insbesondere Edelmetallen, wie beispielsweise Gold, oder anderen Schwermetallen, sehr hoch ist.

Vorzugsweise werden die Feststoffe beim Schritt des Abscheidens, welcher auch als Metallextraktion bezeichnet werden kann, mittels Dichtesortierung in Schwergut und in Leichtgut aufgeteilt, wobei die Dichte des Leichtgutes kleiner ist als die Dichte des Schwergutes. Optional wird aus der Dichtesortieung zusätzlich zum Schwergut und Leichtgut ein Mittelgut erzeugt. Mit dieser Aufteilung lassen sich verschiedene metallische Stoffe mit entsprechender Dichte einfach aus den Verbrennungsrückständen zurückgewinnen.

Besonders bevorzugt weist das Schwergut eine Dichte von grösser als 7 kg/L auf. Das Leichtgut weist bevorzugt eine Dichte von weniger als 3.5 kg/L auf. Das Mittelgut weist eine Dichte von 3.5 kg/L bis 7 kg/L auf.

Vorzugsweise wird vor dem Schritt des Abscheidens der Flüssigkeitsgehalt der Verbrennungsrückstände bzw. der Suspension mit einem Schritt der Entschlämmung, vorzugsweise im besagten Zyklon, reduziert.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer ersten Vorrichtung, welche nach einem erfindungsgemässen Verfahren betrieben werden kann;
- Fig. 2: eine schematische Ansicht einer zweiten Vorrichtung, welche nach dem erfindungsgemässen Verfahren betrieben werden kann; und
- Fig. 3: eine schematische Ansicht einer dritten Vorrichtung, welche nach dem erfindungsgemässen Verfahren betrieben werden kann.

### BESCHREIBUNG BEVORZUGTER AUSFÜHRUNGSFORMEN

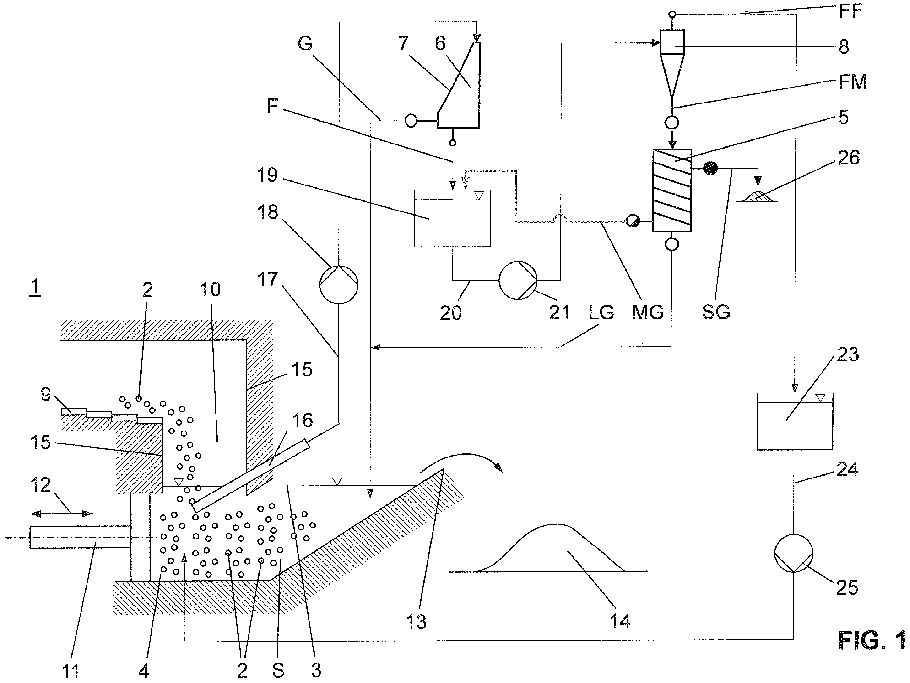

In der Figur 1 wird eine schematische Ansicht einer Vorrichtung zur Durchführung eines Verfahrens zur Zurückgewinnung von Metallen aus festen Verbrennungsrückständen 2 einer Müllverbrennungsanlage 1 gezeigt. Unter festen Verbrennungsrückständen 2 wird in diesem Zusammenhang insbesondere Asche verstanden, welche aus der Müllverbrennungsanlage 1 stammt. Die Asche umfasst dabei im Wesentlichen mineralische Bestandteile und metallische Bestandteile. Letztere sollen mit dem Verfahren aus der Asche zurückgewonnen werden.

In der Müllverbrennungsanlage 1 gelangen die Verbrennungsrückstände 2 über einen Rost 9 und einen sich dem Rost 9 anschliessenden Abwurfschacht 10 in einen Entschlacker 4. Der Entschlacker 4 liegt in der Linie des Prozesses der Müllverbrennungsanlage 1 und schliesst sich dieser unmittelbar an, weshalb der Entschlacker 4 auch als Teil der Müllverbrennungsanlage 1 bezeichnet werden kann. Der Entschlacker 4 ist mit einer Prozessflüssigkeit 3, insbesondere Wasser oder einer wässrigen Lösung, gefüllt. Die festen Verbrennungsrückstände 2 kühlen sich in der Flüssigkeit 3 ab.

Der Entschlacker 4 umfasst in der vorliegenden Ausführungsform weiterhin eine Austragsvorrichtung für Feststoffe, in Fig. 1 symbolisch als Stössel 11 dargestellt, mit welchem der Entschlacker 4 entleert werden kann. Andere Austragsvorrichtungen wie Kratzkettenförderer können auch eingesetzt werden. Der Stössel 11 kann sich dabei in den Entschlacker 4 entlang der Pfeilrichtung 12 hineinbewegen und der Feststoff am Boden des Entschlackers gelangt über die Auswurfkante 13 in ein Schlackendepot 14. Dieser Vorgang wird periodisch wiederholt, um die vom Rost fallenden Verbrennungsrückstände auszutragen.

Der Entschlacker 4 hat in bekannter Weise zudem die Funktion eines Siphons. Die Seitenwände 15 des Abwurfschachtes 10 erstrecken sich dabei in die Flüssigkeit 3 hinein, sodass keine Luft durch den Entschlacker in den (unter Unterdruck stehenden) Ofen zuströmen kann. Dies ist aus dem Stand der Technik bereits bekannt.

Das Verfahren der Zurückgewinnung von Metallen, insbesondere Edelmetallen, wie Gold, oder anderen Schwermetallen, aus festen Verbrennungsrückständen 2 einer Müllverbrennungsanlage 1 umfasst im Wesentlichen den Schritt des Austragens der Verbrennungsrückstände 2 aus dem Verbrennungsteil, insbesondere der Brennkammer, der Müllverbrennungsanlage 1 und die anschliessende nassmechanische Aufbereitung der Verbrennungsrückstände 2 mit einem Schritt des Abscheidens der Metalle aus den Verbrennungsrückständen 2. Die nassmechanische Aufbereitung erfolgt dabei zeitnah an den Schritt des Austragens.

Der Schritt des Austragens der Verbrennungsrückstände 2 aus dem Verbrennungsteil der Verbrennungsanlage 1 wird in der Figur 1 dargestellt. Hier fallen die Verbrennungsrückstände 2 vom Rost 9 her kommend durch den Auswurfschacht 10 in den Entschlacker 4. Die Verbrennungsrückstände 2 sind dabei aus dem Verbrennungsteil ausgetragen, sobald diese im Entschlacker 4 liegen.

Wie erwähnt umfasst die nasschemische Aufbereitung der Verbrennungsrückstände einen Schritt des Abscheidens der Metalle aus den Verbrennungsrückständen 2. Die schweren Bestandteile, also die Metalle, werden in der vorliegenden Ausführungsform über eine Scheidevorrichtung 5 aus den Verbrennungsrückständen abgeschieden. In der Scheidevorrichtung 5 werden also die gewünschten metallischen Bestandteile aus den Verbrennungsrückständen abgeschieden.

Die nassmechanische Aufbereitung wird, wie erläutert, möglichst zeitnah an den Schritt des Austragens durchgeführt. Unter zeitnah wird im vorliegenden Zusammenhang eine Zeitdauer zwischen 0 und 48 Stunden, besonders bevorzugt eine Zeitdauer zwischen 0 und maximal 12 Stunden verstanden. Die nassmechanische Aufbereitung erfolgt also in einem für Schlackenaufbereitung von Müllverbrennungsanlagen relativ kurzen Zeitraum nach dem Austrag der Verbrennungsrückstände.

Wie in der Figur 1 gezeigt umfasst die nassmechanische Aufbereitung insbesondere den Schritt der Zuführung der festen Verbrennungsrückstände 2 in ein mit der Flüssigkeit 3 befülltes Becken. Das Becken hat hier die Gestalt des Entschlackers 4. Die Verbrennungsrückstände 2 werden mit der Flüssigkeit 3, die sich im Becken befindet, zu einer Suspension S vermischt. Die Suspension S besteht also aus den festen Verbrennungsrückständen 2 und dem Wasser 3. Diese Suspension S wird für den Schritt des Abscheidens der metallischen Bestandteile der Scheidevorrichtung 5 zugeführt. Dabei werden die metallischen Bestandteile aus den in der Suspension S vorhandenen Verbrennungsrückständen 2 zurückgewonnen.

Wie in der Figur 1 gezeigt ist es besonders vorteilhaft, wenn das Verfahren "on site" also vor Ort in der Müllverbrennungsanlage 1 durchgeführt wird. Dabei kann die zeitnahe nassmechanische Aufbereitung nach dem Schritt des Austragens besonders einfach durchgeführt werden. Die Verbrennungsrückstände 2 werden direkt vom Rost 9 der Müllverbrennungsanlage 1 gegebenenfalls über den Abwurfschacht 10 gewonnen. Diese Verbrennungsrückstände 2 können dann der Scheidevorrichtung 5 zugeführt werden.

Sofern die Verbrennungsrückstände 2 als Suspension S der Scheidevorrichtung 5 zugeführt werden, wird die Suspension S mit den Verbrennungsrückständen 2 direkt aus dem Entschlacker 4 der Müllverbrennungsanlage 1 gewonnen. Es ist aber auch denkbar, dass die Verbrennungsrückstände aus dem Entschlacker zunächst ausgetragen und vor der Behandlung noch kurzzeitig zwischengelagert werden.

In der vorliegenden Ausführungsform wird die Suspension S über eine Lanze 16 aus dem Entschlacker 4 gewonnen. Über eine Rohrleitung 17 und eine Pumpe 18 kann die Suspension S in Richtung Scheidevorrichtung 5 gefördert werden.

In einer anderen Ausführungsform kann die Suspension S auch dadurch gewonnen werden, dass die gesamten Verbrennungsrückstände 2 aus dem Entschlacker 4 ausgetragen und mittels Klassiervorrichtung 6 nassmechanisch in die oben beschriebenen Fraktionen klassiert werden.

In der Ausführungsform nach der Figur 1 steht die Lanze 16 mit der Rohrleitung 17 und der Pumpe 18 mit einer Klassiervorrichtung 6 in Verbindung. Über die Lanze 16, die Rohrleitung 17 und die Pumpe 18 kann also die Suspension S mit den festen Verbrennungsrückständen 2 der Klassiervorrichtung 6 zugeführt werden. Selbstverständlich können auch andere Verfahren eingesetzt werden, um die Suspension S aus dem Entschlacker der Klassiervorrichtung 6 zuzuführen. Eine solche Möglichkeit wäre die Nasssiebung der Schlacke unmittelbar nach dem Austrag aus dem Entschlacker, wobei als Waschwasser vorzugsweise die im Entschlacker vorhandene Flüssigkeit dient.

In der Klassiervorrichtung 6 werden die Verbrennungsrückstände 2 in einem Schritt der Klassierung in mindestens zwei Teilmengen klassiert. In der vorliegenden Ausführungsform werden die festen Verbrennungsrückstände 2 in eine erste Teilmenge mit Grobgut G und eine zweite Teilmenge mit Feingut F klassiert.

Das Feingut bzw. die Feingutfraktion F umfasst vorzugsweise Verbrennungsrückstände 2 mit einer Korngrösse kleiner als 4 mm, insbesondere von kleiner als 2 mm. Das Grobgut bzw. die Grobgutfraktion G umfasst Verbrennungsrückstände 2 mit einer Korngrösse von grösser als 4 mm, insbesondere von grösser als 2 mm.

Die Klassiervorrichtung 6 ist vorzugsweise ein Bogensieb 7, durch welches die festen Verbrennungsrückstände 2 hindurchgeführt werden. Mit dem Bogensieb 7 wird dabei die Klassierung in Grobgut G und Feingut F vorgenommen. Weiter hat das Bogensieb den Vorteil, dass die festen Verbrennungsrückstände 2 von groben Störstoffen gereinigt wird.

Das Grobgut G wird im vorliegenden Fall wiederum dem Entschlacker 4 zugeführt, vorzugsweise kurz vor der Austragskante. In alternativen Ausführungsformen kann das Grobgut G aber auch direkt dem Schlackendepot 14 zugeführt werden.

Das Feingut F wird nach der Klassiervorrichtung 6 in einem Behälter 19 zwischengelagert oder direkt weiterverarbeitet.

Der Behälter 19 steht über eine Rohrleitung 20 und eine Pumpe 21 mit einer Entschlämmungsvorrichtung 8 in Verbindung. Die Entschlämmungsvorrichtung 8 kann auch als zweite Klassiervorrichtung 8 bezeichnet werden. In der Klassiervorrichtung 8 werden die Verbrennungsrückstände 2 in eine zweite und dritte Teilmenge, nämlich Feingut FM und Feinstgut FF unterteilt.

Die Feinstgutfraktion FF umfasst vorzugsweise Verbrennungsrückstände 2 mit einer Korngrösse von kleiner als 0.05 mm, insbesondere von kleiner als 0.03 mm.

Das Feinstgut FF wird einem Behälter 23 zugeführt und über eine Rohrleitung 24 und eine Pumpe 25 kann das Feinstgut FF dann wiederum dem Entschlacker 4 zugeführt werden. Diese Rückführung erfolgt mit Vorteil am Boden des Entschlackers, sodass der Fluidstrom genutzt werden kann, um die auf dem Boden des Entschlackers liegenden Partikel aufzuwirbeln und in den Einsaugbereich der Lanze 16 zu befödern.

Das Feingut FM wird von der Klassierungsvorrichtung bzw. der Entschlämmungsvorrichtung 8 der Scheidevorrichtung 5 zugeführt. In der Scheidevorrichtung 5 erfolgt die eigentliche Abscheidung der metallischen Bestandteile in den noch vorhandenen festen Verbrennungsrückständen 2, welche als Feingut FM in die Scheidevorrichtung 5 gelangen.

Bei der Scheidevorrichtung 5 werden die Metalle aus den Verbrennungsrückständen 2 abgeschieden. Vorzugsweise folgt diese Abscheidung mittels einer Dichtesortierung, insbesondere mit einem Wendelscheider. Eine weitere Möglichkeit wäre der Einsatz eines nass betriebenen Wirbelstromsortierers, der die elektrisch leitfähigen Metalle von dem nicht-leitfähigen mineralischen Schlackenmaterial trennt.

Im Falle der Dichtesortierung werden beim Schritt des Abscheidens die Verbrennungsrückstände 2, hier also das Feingut FM, in Schwergut SG und in Leichtgut LG aufgeteilt. Optional werden die Verbrennungsrückstände 2 zusätzlich zum Schwergut SG und Leichtgut LG auch noch in ein Mittelgut MG aufgeteilt.

Die Dichtebereiche von Schwergut SG, ggf. Mittelgut MG und Leichtgut LG lassen sich verschiedenartig nach den gesuchten Metallen wählen. Für die Rückgewinnung von Metallen, insbesondere Schwermetallen, ist das Schwergut SG die interessante Klasse. Das Schwergut SG wird, wie in der Figur 1 gezeigt, in einem Schwergutdepot 26 deponiert und somit aus dem Verfahren zur weiteren Verwendung weggeführt.

Das Leichtgut LG wird dem Entschlacker 4 zugeführt. Das Mittelgut MG hingegen wird vorzugsweise dem Behälter 19 zugeführt, sodass das Mittelgut MG nochmals der Scheidevorrichtung 5 gegebenenfalls über die Klassiervorrichtung 8 zugeführt werden kann.

Das Schwergut weist vorzugsweise eine Dichte von grösser als 7 Kg/L (Kilogramm pro Liter) aus. Das Leichtgut LG weist vorzugsweise eine Dichte von weniger als 3,5 Kg/L auf und das Mittelgut MG weist vorzugsweise eine Dichte von 3,5 Kg/L bis 7 Kg/L auf. Die Dichtenverhältnisse können aber auch anders gewählt werden. Es hat sich aber gezeigt, dass die Grenze von 7 Kg/L für die Rückgewinnung von Schwermetallen, insbesondere Gold etc., besonders vorteilhaft ist.

Vor dem Schritt des Abscheidens der metallischen Bestandteile aus den festen Verbrennungsrückständen 2 ist es vorteilhaft, wenn die Verbrennungsrückstände 2 beziehungsweise die Suspension S entschlämmt werden. Dabei wird der Flüssigkeitsgehalt der Verbrennungsrückstände 2 beziehungsweise der Suspension S reduziert.

In der Ausführungsform nach Figur 1 erfolgt die Entschlämmung in einem Hydrozyklon 8. In diesem Zyklon 8 wird der Flüssigkeitsgehalt der Verbrennungsrückstände 2 bzw. der Suspension S reduziert, sodass der Scheidevorrichtung 5 die Verbrennungsrückstände 2 in der optimalen Form zuführbar sind. Alternativ könnte auch ein mechanischer Strömungsklassierer, z.B. ein Schneckenklassierer, eingesetzt werden.

Weiter ist vorteilhaft, das vor der Entnahme der Suspension S aus dem Entschlacker 4 bzw. aus dem Becken 19, die Suspension S durchmischt wird. Beispielsweise durch ein Rührwerk oder ähnliches.

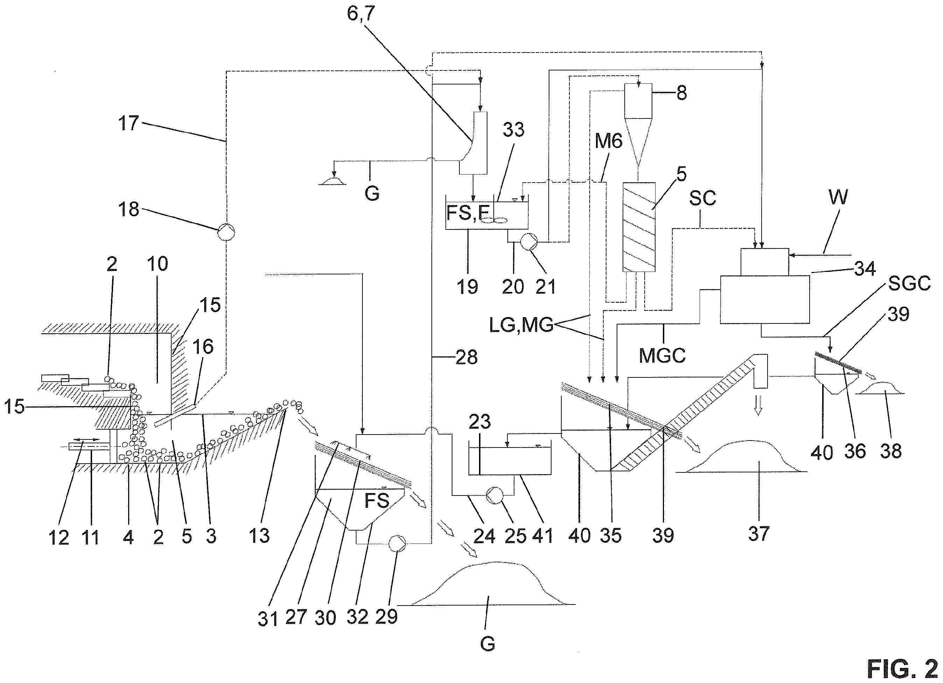

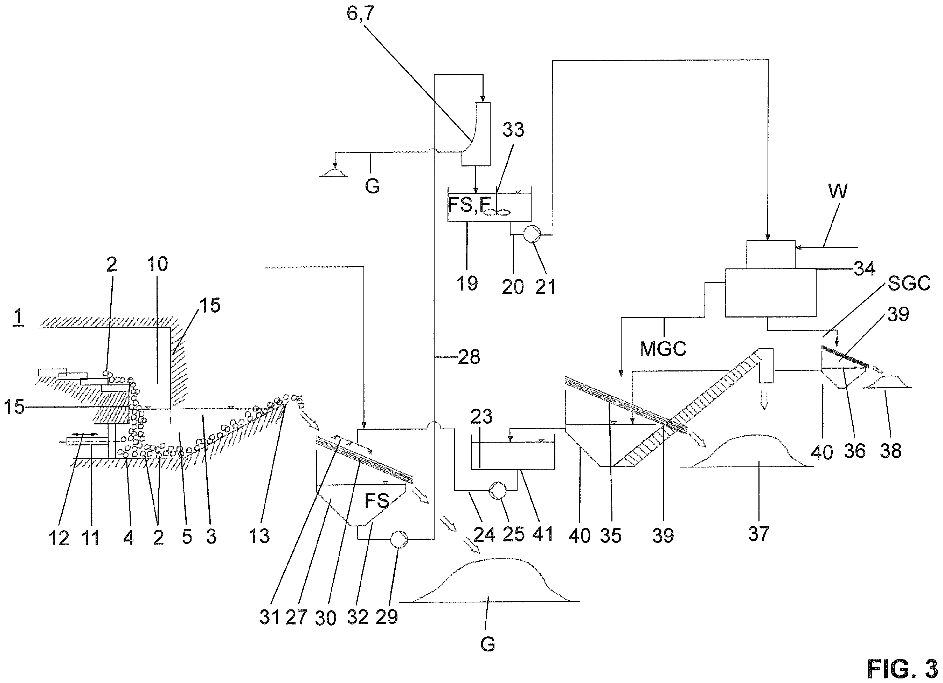

In den Figuren 2 und 3 werden weitere Ausführungsformen einer Vorrichtung zur Durchführung eines Verfahrens zur Rückgewinnung von Metallen aus festen Verbrennungsrückständen einer Müllverbrennungsanlage 1 gezeigt. Gleiche Teile sind dabei mit gleichen Bezugszeichen versehen und es wird bezüglich dieser Teile auf die Beschreibung zur Figur 1 verwiesen.

In der zweiten Ausführungsform gemäss der Figur 2 wird die Suspension S mit den festen Verbrennungsrückständen 2 einer ersten Klassiervorrichtung 27 zugeführt. Bei der ersten Klassiervorrichtung 27 wird von der Suspension ein Grobgut G abgeschieden. Das Grobgut G umfasst dabei Verbrennungsrückstände mit einer Korngrösse von grösser als 4mm, insbesondere von grösser als 2 mm. Das Grobgut G wird in einem Depot deponiert. Weiter wird dann die Suspension S von der ersten Klassiervorrichtung 27 zu einer zweiten Klassiervorrichtung 6, 7 geführt, wo eine weitere Klassierung vorgenommen wird. Auch hier wird wiederum ein Grobgut von grösser als 2mm abgeschieden. Die erste Klassiervorrichtung 27 dient insbesondere der Entfernung von groben Teilen, wie Mineralik, Unverbranntem und Metallen etc., während die zweite Klassiervorrichtung 6, 7 ausgelegt ist, um restliches Überkorn, insbesondere Langkorn oder Drähte, zu sortieren.

Die Suspension S mit den Verbrennungsrückständen 2 wird über eine Rohrleitung 28 von der ersten Klassiervorrichtung 27 zur zweiten Klassiervorrichtung 6, 7 gefördert. In der Rohrleitung 28 kann eine Pumpe 29 vorhanden sein.

Die erste Klassiervorrichtung 27 ist vorzugsweise ein Nasssieb, wobei die Suspension S mit den Verbrennungsrückständen auf ein Sieb 30 gelangen und dort mit einem Flüssigkeitsstrahl 31, insbesondere einen Wasserstrahl, beaufschlagt werden. Verbrennungsrückstände mit der entsprechenden Korngrösse gelangen in einen Sammelbehälter 32, welcher in die Rohrleitung 28 mündet. Durch die erste Klassiervorrichtung 27 wird eine Feingutsuspension FS, welche sich aus der Flüssigkeit und den Verbrennungsrückständen 2 zusammensetzt, gewonnen.

Die erste Klassiervorrichtung 27 liegt vorzugsweise unmittelbar im Bereich der Auswurfkante 13 des Entschlackers 4 und wird so beschickt, dass die Suspension S bzw. die Verbrennungsrückstände über die Auswurfkante 13 auf das Sieb 30 der ersten Klassiervorrichtung 27 gelangen.

Nach der zweiten Klassiervorrichtung 6, 7 wird die Suspension in einem Behälter 19 zwischengelagert. Im Behälter 19 kann ein Rührwerk 33 angeordnet sein, welches die Suspension vermischt. Die Suspension kann hier noch immer als Feingutsuspension FS oder Feingut F bezeichnet werden.

Anschliessend wird dann die Suspension einer Dichtesortiereinheit 34 zugeführt. Hier wird die Suspension anhand ihrer Dichte sortiert. Die Dichtesortiereinheit 34 wird im Zusammenhang mit der Figur 3 detaillierter erläutert. Durch die Dichtesortiereinheit 34 wird ein Schwergut-Konzentrat SGC und ein Mittelgut-Konzentrat MGC abgeschieden. Das Schwergut-Konzentrat SGC weist dabei Bestandteile auf, welche eine höhere Dichte aufweisen als das Mittelgut-Konzentrat MGC. Sowohl das Schwergut-Konzentrat SGC als auch das Mittelgut-Konzentrat MGC werden jeweils einer Entwässerungsvorrichtung 35, 36 zugeführt, wobei hier das Konzentrat in flüssige und feste Bestandteile entsprechend aufgeteilt wird. Die festen Bestandteile werden im entsprechenden Depot 37, 38 zwischengelagert und können dann einer weiteren Verwendung zugeführt werden.

Das Schwergut-Konzentrat SGC umfasst die metallischen Bestandteile, insbesondere die Edelmetalle, wie beispielsweise Gold, oder andere Schwermetalle.

In einer alternativen Durchführung des Verfahrens kann die im Behälter 19 gelagerte Suspension nach der Klassierung auch der Entschlämmungsvorrichtung 8 und den nachfolgenden Vorrichtungen zugeführt werden. Die Entschlämmungsvorrichtung 8 ist dabei im Wesentlichen identisch wie diejenige gemäss der Figur 1 und es wird auf die oben genannte Beschreibung verwiesen.

Der Rücklauf der aus der Entschlämmungsvorrichtung 8 gewonnenen Teile erfolgt dabei in der Ausführungsform gemäss der Figur 2 über die Entwässerungsvorrichtungen 35, 36 und/oder über die Dichtesortiereinheit 34.

Die Entwässerungsvorrichtungen 35, 36 umfassen bevorzugt ein Sieb 39 und ein Auffangbehälter 40.

Bezüglich der Rückgewinnung der Flüssigkeit bei den Entwässerungsvorrichtungen 35, 36 ist vorzugsweise vorgesehen, dass diese über eine Rückführvorrichtung 41 der ersten Klassiervorrichtung 27 zurückgeführt werden. Die Rückführvorrichtung 41 umfasst hier einen Behälter 23, eine Pumpe 25 und entsprechende Rohrleitungen 24, welche den Behälter 23 beziehungsweise die Pumpe 25 mit den Entwässerungsvorrichtungen 35, 36 und der ersten Klassiervorrichtung 27 verbinden.

In der Figur 3 wird die dritte Ausführungsform im Detail gezeigt. Wiederum wird auf die Figuren 1 und 2 verwiesen, gleiche Teile tragen gleiche Bezugszeichen. Im Unterschied zur zweiten Ausführungsform kommt die dritte Ausführungsform ohne die Entschlämmungsvorrichtung 8 gemäss der ersten Ausführungsform aus.

In der dritten Ausführungsform wird aus der Müllverbrennungsanlage 1 ebenfalls eine Suspension bestehend aus einer Flüssigkeit, insbesondere Wasser, und darin vorhandene feste Verbrennungsrückständen 2 gewonnen. Das Substrat S wird dabei der ersten Klassiervorrichtung 27 zugeführt, wo die Suspension in ein Grobgut und ein Feingut aufgeteilt wird. Das Grobgut weist vorzugsweise eine Korngrösse von grösser als 2mm auf und das Feingut weist vorzugsweise eine Korngrösse von kleiner als 2 mm auf. Anschliessend wird das Feingut über eine Rohrleitung 28 und eine Pumpe 29 der zweiten Klassiervorrichtung 6, 7 zugeführt.

Anschliessend wird die Suspension mit dem Feingut, welches Partikel mit einer Korngrösse von kleiner als 2mm umfasst, einem Behälter 19 zugeführt. Der Behälter 19 umfasst hier ein Rührwerk 33, mit welchem die Suspension durchmischt wird. Über eine Pumpe 21 und eine Rohrleitung 20 gelangt dann die Suspension zu einer Dichtesortiereinheit 34. Die Dichtesortiereinheit 34 kann beispielweise ein Zentrifugal-Konzentrator sein. Die Dichtesortiereinheit 34 kann, wenn nötig, oder muss mit Wasser W zusätzlich beschickt werden. In der Dichtesortiereinheit 34 wird die Suspension in ein Schwergut-Konzentrat SGC und ein Mittelgut-Konzentrat MGC aufgeteilt. Wie oben im Zusammenhang mit der Figur 2 beschrieben wird das Schwergut-Konzentrat und das Mittelgut-Konzentrat jeweils einer Entwässerungsvorrichtung 35, 36 zugeführt, wobei die festen Teile von der Flüssigkeit getrennt wird. Die Flüssigkeit, welche von den Restenbestandteilen abgetrennt wird, wird über eine Vorrichtung 23, eine Rohrleitung 24 und eine Pumpe 25 wieder der ersten Klassiervorrichtung 27 zugeführt.

Zusammenfassend kann bezüglich der Ausführungsform nach der Figur 3 gesagt werden, dass diese im Wesentlichen identisch zur Ausführungsform nach der Figur 2 ohne die Teile um die Entschlämmungsvorrichtung 8 ist.

**BEZUGSZEICHENLISTE**

| | | | |
|---|---|---|---|
| 1 | Müllverbrennungsanlage | 30 | Sieb |
| 2 | feste Verbrennungsrückstände | 31 | Wasserstrahl |
| 3 | Flüssigkeit | 32 | Sammelbehälter |
| 4 | Entschlacker | 33 | Rührwerk |
| 5 | Scheidevorrichtung | 34 | Dichtesortiereinheit |
| 6 | Klassiervorrichtung | 35 | Entwässerungsvorrichtung |
| 7 | Sieb, Bogensieb | 36 | Entwässerungsvorrichtung |
| 8 | Entschlämmungsvorrichtung, Zyklon | 37 | Depot Mittelgut |
| | | 38 | Depot Schwergut |
| 9 | Rost | 39 | Sieb |
| 10 | Abwurfschacht | 40 | Auffangbehälter |
| 11 | Stössel | 41 | Rückführvorrichtung |
| 12 | Bewegungsrichtung Stössel | | |
| 13 | Auswurfkante | G | Grobgut |
| 14 | Schlackendepot | F | Feingut |
| 15 | Seitenwände | FF | Feinstgut |
| 16 | Lanze | FM | Feingut nach Entschlämmung |
| 17 | Rohrleitung | | |
| 18 | Pumpe | SGC | Schwergutkonzentrat |
| 19 | Behälter | MGC | Mittelgutkonzentrat |
| 20 | Rohrleitung | | |
| 21 | Pumpe | SG | Schwergut |
| 23 | Behälter | MG | Mittelgut |
| 24 | Rohrleitung | LG | Leichtgut |
| 25 | Pumpe | S | Suspension |
| 26 | Schwergutdepot | | |
| 27 | erste Klassiervorrichtung | | |
| 28 | Rohrleitung | | |
| 29 | Pumpe | | |

## Patentansprüche

1. Verfahren zur Rückgewinnung von Metallen, insbesondere Schwermetallen, aus festen Verbrennungsrückständen (2) einer Müllverbrennungsanlage (1) umfassend den Schritt des Austragens der Verbrennungsrückstände (2) aus dem Verbrennungsteil der Müllverbrennungsanlage (1), wobei das Verfahren die nassmechanische Aufbereitung der Verbrennungsrückstände (2) mit einem Schritt des Abscheidens der Metalle aus den Verbrennungsrückständen (2) umfasst, wobei die nassmechanische Aufbereitung zeitnah an den Schritt des Austragens erfolgt,
wobei vor dem Schritt des Abscheidens die Verbrennungsrückstände (2) mit einer Flüssigkeit, insbesondere Wasser, zu einer Suspension (S) vermischt werden,
**dadurch gekennzeichnet,**
**dass** anschliessend mit mindestens einer Klassiervorrichtung (6, 7, 27) eine grössenabhängige Sortierung der in der Suspension (S) vorhandenen Verbrennungsrückstände (2) erfolgt, wobei eine Suspension (S) mit Verbrennungsrückständen (2) von geeigneter Korngrösse, insbesondere von kleiner als 2 mm, gewonnen wird, welche Suspension (S) anschliessend dem Schritt des Abscheidens zugeführt wird, und
**dass** die Abscheidung der Metalle beim Schritt des Abscheidens mittels Dichtesortierung erfolgt.

2. Verfahren nach Anspruch 1 , **dadurch gekennzeichnet, dass** die nassmechanische Aufbereitung maximal 48 Stunden, vorzugsweise maximal 12 Stunden, nach dem Schritt des Austragens durchgeführt wird.

3. Verfahren nach einem der vorhergehenden Ansprüche, **dadurch gekennzeichnet, dass** die nassmechanische Aufbereitung den Schritt der Zuführung der festen Verbrennungsrückstände (2) in ein mit einer Flüssigkeit (3) befülltes Becken, insbesondere einen Entschlacker (4), umfasst, wobei die Verbrennungsrückstände (2) mit der Flüssigkeit (3) zu einer Suspension (S) vermischt werden, von welcher Suspension (S) die spezifisch schweren Bestandteile, insbesondere die Metalle, abgeschieden werden.

4. Verfahren nach einem der vorhergehenden Ansprüche, **dadurch gekennzeichnet, dass** das Verfahren on site also vor Ort in der Müllverbrennungsanlage (1) durchgeführt wird, wobei die Verbrennungsrückstände (2) direkt vom Rost (9) ggf. über einen Abwurfschacht (10) gewonnen werden, oder wobei die Suspension (S) mit den Verbrennungsrückständen (2) direkt aus einem Entschlacker (4) der Müllverbrennungsanlage (1) gewonnen wird, oder wobei die Suspension (S) mit den Verbrennungsrückständen in Prozessrichtung gesehen unmittelbar nach der Müllverbrennungsanlage (1) gewonnen wird.

5. Verfahren nach einem der vorgehenden Ansprüche, **dadurch gekennzeichnet, dass** der Schritt des Abscheidens der Metalle aus den Verbrennungsrückständen (2) bzw. der Suspension (S) mittels Dichtesortierung durch eine Scheidevorrichtung (6), insbesondere mit einem Wendelscheider, oder mittels anderer gravimetrischer Separationssysteme erfolgt.

6. Verfahren nach einem der vorhergehenden Ansprüche, **dadurch gekennzeichnet, dass** vor dem Schritt des Abscheidens (5) die Verbrennungsrückstände (2), ggf. in der Suspension (S), mindestens einer Klassiervorrichtung (6) zugeführt werden, und in einem Schritt der Klassierung in mindestens zwei Teilmengen nämlich in eine erste Teilmenge mit Grobgut (G) und eine zweite Teilmenge mit Feingut (F) klassiert werden, insbesondere **dadurch gekennzeichnet dass** die Feingutfraktion (F) Verbrennungsrückstände (2) aufweist, die zu 80% eine Korngrösse kleiner als 4 mm, vorzugsweise von kleiner als 2 mm, aufweist und dass die Grobgutfraktion überwiegend Verbrennungsrückstände (2) mit einer Korngrösse von grösser als 4 mm, vorzugsweise von grösser als 2 mm aufweist.

7. Verfahren nach Anspruch 6, **dadurch gekennzeichnet, dass** die Verbrennungsrückstände (2) in eine dritte Teilmenge mit Feinstgut (FF) unterteilt werden, wobei die dritte Teilmenge vorzugsweise von der zweiten Teilmenge klassiert wird, insbesondere **dadurch gekennzeichnet dass** die Feinstgutfraktion (FF) überwiegend Verbrennungsrückstände (2) mit einer Korngrösse von kleiner als 0.05 mm, vorzugsweise von kleiner als 0.03 mm aufweist.

8. Verfahren nach einem der Ansprüche 6 bis 7, **dadurch gekennzeichnet, dass** das Verfahren weiterhin den Schritt des Zuführens von mindestens einer Teilmenge, vorzugsweise des Feingutes (F;FM), zur Scheidevorrichtung (6) und des Rückführens oder des Deponierens von mindestens einer anderen Teilmenge, vorzugsweise des Grobgutes (G) und/oder des Feinstgutes (FF) umfasst.

9. Verfahren nach einem der Ansprüche 6 bis 8, **dadurch gekennzeichnet, dass** der Schritt der Klassierung mit einer ersten Klassiervorrichtung (27) und mit einer von der ersten unterschiedlichen zweiten Klassiervorrichtung (6, 7) erfolgt, wobei die erste Klassiervorrichtung (27) bevorzugt eine Nasssiebung ist und wobei die zweite Klassiervorrichtung (6, 7) bevorzugt ein Bogensieb (7) ist, wobei nach dem Bogensieb (7) eine Suspension (S) mit Feingut (F), von welcher dann die Metalle abgeschieden werden, und Grobgut (G) resultiert.

10. Verfahren nach einem der Ansprüche 5 bis 9, **dadurch gekennzeichnet, dass** die Klassierung von Feingut (F) und Grobgut (G) in einer ersten Klassiervorrichtung (6) und die weitere Klassierung in Feinstgut (FF) in einer zweiten von der ersten Klassiervorrichtung unterschiedlichen Klassiervorrichtung (8) erfolgt, wobei die erste Klassiervorrichtung bevorzugt ein Sieb (7) oder ein Bogensieb, und die zweite Klassiervorrichtung ein Zyklon (8) ist.

11. Verfahren nach einem der vorhergehenden Ansprüche, **dadurch gekennzeichnet, dass** das beim Schritt des Abscheidens die Verbrennungsrückstände (2) eine Suspension, insbesondere eine Suspension mit dem Feingut (F oder FM), in Schwergut (SG) und in Leichtgut (LG) aufgeteilt wird, wobei die Dichte des Leichtgutes (LG) kleiner ist als die Dichte des Schwergutes (SG), insbesondere **dadurch gekennzeichnet dass** die Verbrennungsrückstände (2) zusätzlich zum Schwergut (SG) und Leichtgut (LG) in ein Mittelgut (MG) aufgeteilt wird, und/oder insbesondere **dadurch gekennzeichnet dass** das Schwergut (SG) eine Dichte von grösser als 7 kg/L aufweist und/oder dass das Leichtgut (LG) eine Dichte von weniger als 3.5 kg/L aufweist und/oder dass das Mittelgut (MG) eine Dichte von 3.5 kg/L bis 7 kg/L aufweist.

12. Verfahren nach Anspruch 11, **dadurch gekennzeichnet, dass** das Leichtgut (LG) einem Entwässerungssieb (35, 36) zugeführt wird.

13. Verfahren nach einem der Ansprüche 9 oder 10, **dadurch gekennzeichnet, dass** das Leichtgut (LG) einem Entschlacker (4) zugeführt, und/oder dass das Mittelgut (MG) erneut der Scheidevorrichtung (5) zugeführt wird, und/oder dass das Schwergut (SG) zur weiteren Verwendung aus dem Verfahren weggeführt wird.

14. Verfahren nach einem der vorhergehenden Ansprüche, **dadurch gekennzeichnet,**
**dass** vor dem Schritt des Abscheidens der Flüssigkeitsgehalt der Verbrennungsrückstände (2) bzw. der Suspension (S) mit einem Schritt der Entschlämmung, vorzugsweise im besagten Zyklon (8), reduziert wird und/oder
**dass** das Verfahren den Schritt des Rückführens zumindest eines Teils der nach dem Verfahrensschritt des Abscheidens der metallischen Bestandteile durch den die Scheidevorrichtung (6) übrig bleibenden Verbrennungsrückstände (2) in einen Entschlacker (4) umfasst und/oder
**dass** die Flüssigkeit (3) Wasser oder eine wässrige Lösung ist und/oder dass die Verbrennungsrückstände (2) Aschenpartikel sind.

## Claims

1. Process for recovering metals, in particular heavy metals, from solid incineration residues (2) in a waste incineration plant (1) comprising the step of discharge of the incineration residues (2) from the incineration part of the waste incineration plant (1), where the process comprises the wet-mechanical treatment of the incineration residues (2) with a step of separation of the metals from the incineration residues (2),
where the wet-mechanical treatment occurs at a time close to the step of discharge,
where, before the step of separation, the incineration residues (2) are mixed with a liquid, in particular water, to give a suspension (S),
**characterized**
**in that** a size-dependent sorting of the incineration residues (2) present in the suspension (S) is subsequently carried out by means of at least one classification apparatus (6, 7, 27), giving a suspension (S) comprising incineration residues (2) of suitable particle size, in particular of less than 2 mm, which suspension (S) is subsequently fed to the step of separation, and
**in that** the metals are separated off by means of density sorting in the step of separation.

2. Process according to Claim 1, **characterized in that** the wet-mechanical treatment is carried out not more than 48 hours, preferably not more than 12 hours, after the step of discharge.

3. Process according to any of the preceding claims, **characterized in that** the wet-mechanical treatment comprises the step of introduction on the solid incineration residues (2) into a tank filled with a liquid (3), in particular a deslagger (4), where the incineration residues (2) are mixed with the liquid (3) to give a suspension (S) from which suspension (S) the constituents having a high specific gravity, in particular the metals, are separated.

4. Process according to any of the preceding claims, **characterized in that** the process is carried out on site in the waste incineration plant (1), where the incineration residues (2) are obtained directly from the grating (9), optionally via an output shaft (10) or where the suspension (S) comprising the incineration residues (2) is obtained directly from a deslagger (4) of the waste incineration plant (1) or where the suspension (S) comprising the incineration residues is obtained, viewed in the process direction, directly after the waste incineration plant (1).

5. Process according to any of the preceding claims, **characterized in that** the step of separation of the metals from the incineration residues (2) or from the suspension (S) is carried out by means of density sorting by a separation apparatus (6), in particular using a helical separator, or by means of other gravimetric separation systems.

6. Process according to any of the preceding claims, **characterized in that**, before the step of separation (5), the incineration residues (2), optionally in the suspension (S), are fed to at least one classification apparatus (6) and, in a step of classification, are classified into at least two fractions, namely into a first fraction comprising coarse material (G) and a second fraction comprising fine material (F), in particular **characterized in that** the fine material fraction (F) comprises incineration residues (2) of which 80% has a particle size of less than 4 mm, preferably of less than 2 mm, and **in that** the coarse material fraction comprises predominantly incineration residues (2) having a particle size of greater than 4 mm, preferably of greater than 2 mm.

7. Process according to Claim 6, **characterized in that** the incineration residues (2) are divided into a third fraction comprising very fine material (FF), where the third fraction is preferably separated off by classification from the second fraction, in particular **characterized in that** the very fine material fraction (FF) comprises predominantly incineration residues (2) having a particle size of less than 0.05 mm, preferably of less than 0.03 mm.

8. Process according to either Claim 6 or 7, **characterized in that** the process further comprises the step of introduction of at least one fraction, preferably of the fine material (F; FM), into the separation apparatus (6) and recirculation or landfilling of at least one other fraction, preferably of the coarse material (G) and/or of the very fine material (FF).

9. Process according to any of Claims 6 to 8, **characterized in that** the step of classification is carried out using a first classification apparatus (27) and using a second classification apparatus (6, 7) which is different from the first, where the first classification apparatus (27) is preferably a wet sieving device and where the second classification apparatus (6, 7) is preferably a curved sieve (7), where a suspension (S) comprising fine material (F), from which the metals are then separated, and coarse material (G) results after the curved sieve (7).

10. Process according to any of Claims 5 to 9, **characterized in that** the classification of fine material (F) and coarse material (G) is carried out in a first classification apparatus (6) and the further classification into very fine material (FF) is carried out in a second classification apparatus (8) which is different from the first classification apparatus, where the first classification apparatus is preferably a sieve (7) or a curved sieve and the second classification apparatus is a cyclone (8).

11. Process according to any of the preceding claims, **characterized in that**, in the step of separation, the incineration residues (2) are divided into a suspension, in particular a suspension comprising the fine material (F or FM), into heavy material (SG) and into light material (LG), where the density of the light material (LG) is less than the density of the heavy material (SG), in particular **characterized in that** the incineration residues (2) are divided, in addition to the heavy material (SG) and light material (LG), into an intermediate material (MG) and/or in particular **characterized in that** the heavy material (SG) has a density of greater than 7 kg/l and/or **in that** the light material (LG) has a density of less than 3.5 kg/l and/or **in that** the intermediate material (MG) has a density of from 3.5 kg/l to 7 kg/l.

12. Process according to Claim 11, **characterized in that** the light material (LG) is fed to a de-watering sieve (35, 36).

13. Process according to either Claim 9 or 10, **characterized in that** the light material (LG) is fed to a deslagger (4) and/or **in that** the intermediate material (MG) is again fed to the separation apparatus (5) and/or **in that** the heavy material (SG) is discharged from the process for further use.

14. Process according to any of the preceding claims, **characterized in that**, before the step of separation, the liquid content of the incineration residues (2) or of the suspension (S) is reduced by means of a step of desludging, preferably in the said cyclone (8), and/or
**in that** the process comprises the step of recirculation of at least part of the incineration residues (2) remaining after the process step of separation of the metallic constituents by means of the separation apparatus (6) into a deslagger (4) and/or
**in that** the liquid (3) is water or an aqueous solution and/or **in that** the incineration residues (2) are ash particles.

## Revendications

1. Procédé de récupération de métaux, en particulier de métaux lourds, à partir de résidus de combustion (2) solides d'une installation d'incinération de déchets (1), comprenant l'étape de déchargement des résidus de combustion (2) à partir de la partie de combustion de l'installation d'incinération de déchets (1), le procédé comprenant le traitement mécanique par voie humide des résidus de combustion (2) avec une étape de séparation des métaux à partir des résidus de combustion (2), le traitement mécanique par voie humide s'effectuant de façon rapprochée dans le temps de l'étape de déchargement,
les résidus de combustion (2) étant, avant l'étape de séparation, mélangés à un liquide, en particulier de l'eau, pour former une suspension (S),
**caractérisé en ce que**,
ensuite, avec au moins un dispositif de calibrage (6, 7, 27), un tri par dimension des résidus de combustion (2) présents dans la suspension (S) est effectué, une suspension (S) contenant des résidus de combustion (2) de granulométrie appropriée, en particulier inférieure à 2 mm, étant obtenue, laquelle suspension (S) est ensuite acheminée à l'étape de séparation, et
**en ce que** la séparation des métaux lors de l'étape de séparation s'effectue au moyen d'un tri par densité.

2. Procédé selon la revendication 1, **caractérisé en ce que** le traitement mécanique par voie humide est effectué au maximum 48 heures, de préférence au maximum 12 heures, après l'étape de déchargement.

3. Procédé selon l'une des revendications précédentes, **caractérisé en ce que** le traitement mécanique par voie humide comprend l'étape d'acheminement des résidus de combustion (2) solides dans un bassin rempli d'un liquide (3), en particulier un décrasseur (4), les résidus de combustion (2) étant mélangés au liquide (3) pour former une suspension (S), les composants spécifiquement lourds, en particulier les métaux, étant séparés de cette suspension (S).

4. Procédé selon l'une des revendications précédentes, **caractérisé en ce que** le procédé est réalisé on site, donc sur place, dans l'installation d'incinération de déchets (1), les résidus de combustion (2) étant obtenus directement à partir de la grille (9), éventuellement par le biais d'un puits de déversement (10), ou la suspension (S) avec les résidus de combustion (2) étant obtenue directement à partir d'un décrasseur (4) de l'installation d'incinération de déchets (1), ou la suspension (S) avec les résidus de combustion étant obtenue directement après l'installation d'incinération de déchets (1), vu dans la direction du process.

5. Procédé selon l'une des revendications précédentes, **caractérisé en ce que** l'étape de séparation des métaux à partir des résidus de combustion (2) ou respectivement de la suspension (S) s'effectue au moyen d'un tri par densité réalisé par un dispositif de séparation, en particulier avec un séparateur hélicoïdal, ou au moyen d'autres systèmes de séparation gravimétrique.

6. Procédé selon l'une des revendications précédentes, **caractérisé en ce que**, avant l'étape de séparation (5), les résidus de combustion (2), éventuellement dans la suspension (S), sont acheminés au moins à un dispositif de calibrage (6) et, dans une étape de calibrage, sont calibrés en au moins deux quantités partielles, à savoir en une première quantité partielle avec un produit grossier (G) et en une deuxième quantité partielle avec un produit fin (F), en particulier **caractérisé en ce que** la fraction de produit fin (F) comporte des résidus de combustion (2) qui, à 80 %, présentent une granulométrie inférieure à 4 mm, de préférence inférieure à 2 mm, et **en ce que** la fraction de produit grossier comporte principalement des résidus de combustion (2) ayant une granulométrie supérieure à 4 mm, de préférence supérieure à 2 mm.

7. Procédé selon la revendication 6, **caractérisé en ce que** les résidus de combustion (2) sont divisés en une troisième quantité partielle avec un produit très fin (FF), la troisième quantité partielle étant calibrée de préférence à partir de la deuxième quantité partielle, en particulier **caractérisé en ce que** la fraction de produit très fin (FF) comporte principalement des résidus de combustion (2) ayant une granulométrie inférieure à 0,05 mm, de préférence inférieure à 0,03 mm.

8. Procédé selon l'une des revendications 6 à 7, **caractérisé en ce que** le procédé comprend également l'étape d'acheminement d'au moins une quantité partielle, de préférence du produit très fin (F ; FM), vers le dispositif de séparation (6), et de renvoi ou de dépôt d'au moins une autre quantité partielle, de préférence du produit grossier (G) et/ou du produit très fin (FF).

9. Procédé selon l'une des revendications 6 à 8, **caractérisé en ce que** l'étape de calibrage s'effectue avec un premier dispositif de calibrage (27) et avec un deuxième dispositif de calibrage (6, 7) différent du premier, le premier dispositif de calibrage (27) étant de préférence un tamisage par voie humide, et le deuxième dispositif de calibrage (6, 7) étant de préférence un tamis cintré (7), le résultat après le tamis cintré (7) étant une suspension (S) avec du produit fin (F), à partir de laquelle les métaux sont ensuite séparés, et avec du produit grossier (G).

10. Procédé selon l'une des revendications 5 à 9, **caractérisé en ce que** le calibrage de produit fin (F) et de produit grossier (G) s'effectue dans un premier dispositif de calibrage (6), et l'autre calibrage en produit très fin (FF) s'effectue dans un deuxième dispositif de calibrage différent du premier, le premier dispositif de calibrage étant de préférence un tamis (7) ou un tamis cintré, et le deuxième dispositif de calibrage étant un cyclone (8).

11. Procédé selon l'une des revendications précédentes, **caractérisé en ce que**, lors de l'étape de séparation des résidus de combustion (2), une suspension, en particulier une suspension avec le produit fin (F ou FM), est divisée en produit lourd (SG) et en produit léger (LG), la densité du produit léger (LG) étant plus faible que la densité du produit lourd (SG), en particulier **caractérisé en ce que** les résidus de combustion (2) sont, en plus du produit lourd (SG) et du produit léger (LG), divisés en un produit moyen (MG), et/ou en particulier **caractérisé en ce que** le produit lourd (SG) présente une densité supérieure à 7 kg/L et/ou **en ce que** le produit léger (LG) présente une densité inférieure à 3,5 kg/L et/ou **en ce que** le produit moyen (MG) présente une densité de 3,5 kg/L à 7 kg/L.

12. Procédé selon la revendication 11, **caractérisé en ce que** le produit léger (LG) est acheminé vers un tamis d'égouttage (35, 36).

13. Procédé selon l'une des revendications 9 ou 10, **caractérisé en ce que** le produit léger (LG) est acheminé vers un décrasseur (4), et **en ce que** le produit moyen (MG) est de nouveau acheminé vers le dispositif de séparation (5), et/ou **en ce que** le produit lourd (SG) est évacué du procédé en vue d'une autre utilisation.

14. Procédé selon l'une des revendications précédentes, **caractérisé en ce que**,
avant l'étape de séparation, la teneur en liquide des résidus de combustion (2) ou respectivement de la suspension (S) est réduite avec une étape de désembouage, de préférence dans ledit cyclone (8), et/ou
**en ce que** le procédé comprend l'étape de renvoi vers un décrasseur (4) d'au moins une partie des résidus de combustion (2) demeurant après l'étape de procédé de séparation des composants métalliques par le dispositif de calibrage (6), et/ou
**en ce que** le liquide (3) est de l'eau ou une solution aqueuse et/ou **en ce que** les résidus de combustion (2) sont des particules de cendres.
